# EUROPEAN PATENT SPECIFICATION

(11) **EP 2 377 759 B1**
(45) Date of publication and mention of the grant of the patent: **14.10.2015**
(21) Application number: 11004627.3
(22) Date of filing: 03.11.2006
(51) Int. Cl.: B64D 13/02, B64D 13/06, F04D 27/02, F04D 29/46

(54) **Integral add heat and surge control valve for compressor**
Integriertes Zuwärme- und Pumpensteuerungsventil für Kompressor
Soupape intégrée d'un compresseur pour la régulation de l'apport de chaleur et du pompage

(30) Priority: 08.11.2005 US 269082
(43) Date of publication of application: 19.10.2011
(62) Divisional of application: 06255673.3
(73) Proprietor: Hamilton Sundstrand Corporation, Windsor Locks, CT 06096-1010 (US)
(72) Inventor: McAuliffe, Christopher, Windsor, Connecticut 06095 (US); Beers, Craig, Wethersfield Connecticut 06109 (US)
(74) Representative: Leckey, David Herbert

(56) References cited:
- EP-A2- 0 676 545
- DE-A1- 4 126 907
- GB-A- 867 849
- GB-A- 1 283 256
- US-A- 2 301 063
- US-A- 3 976 390

## Description

### BACKGROUND OF THE INVENTION

This invention relates to a compressor that is used, for example, in an aircraft for supplying compressed air to a cabin air conditioning system. Such a compressor is known from US3976390.

In some compressor applications in aircraft, air entering a compressor inlet contains water and operates at temperatures below freezing. Ice forming at the inlet reduces the thermodynamic performance of the compressor, can cause damage to the compressor as the ice sheds and can damage the bearing and support structure of the compressor.

Compressors may occasionally operate in an undesirable surge condition in which the ratio between compressor outlet and compressor inlet pressures is undesirable. To avoid surge it is desirable to either lower the compressor outlet pressure or raise the compressor inlet pressure to obtain a pressure ratio within a desired range.

What is needed is a deicing and surge control device that is capable of deicing the compressor inlet and controlling surge in efficient, rapid manner.

### SUMMARY OF THE INVENTION

The invention provides a compressed air unit according to claim 1.

The inventive compressed air unit is designed to provide a compact arrangement so that the valve providing the heated, pressurized air to the inlet is located in close proximity to the inlet for a rapid response time. The duct comprises a relatively short length of tubing interconnecting an add-heat supply outlet and an add-heat plenum inlet, which are provided by a housing of the compressor. The housing also includes an add-heat plenum having an annular wall arranged at the inlet to provide an annular cavity. Hot air from the compressor outlet is provided to the plenum to heat the annular wall quickly at the inlet to prevent deicing.

Accordingly, the present invention provides a deicing and surge control device that deices the compressor and prevents surge.

These and other features of the present invention can be best understood from the following specification and drawings, the following of which is a brief description.

### BRIEF DESCRIPTION OF THE DRAWINGS

Figure 1 is a schematic of the inventive compressed air system.
Figure 2 is a perspective view of an inventive compressed air unit having a combined electric motor and compressor with integrated add heat and surge control features.
Figure 3 is a cross-sectional view of the inventive compressed air unit shown in Figure 2.

### DETAILED DESCRIPTION OF THE PREFERRED EMBODIMENT

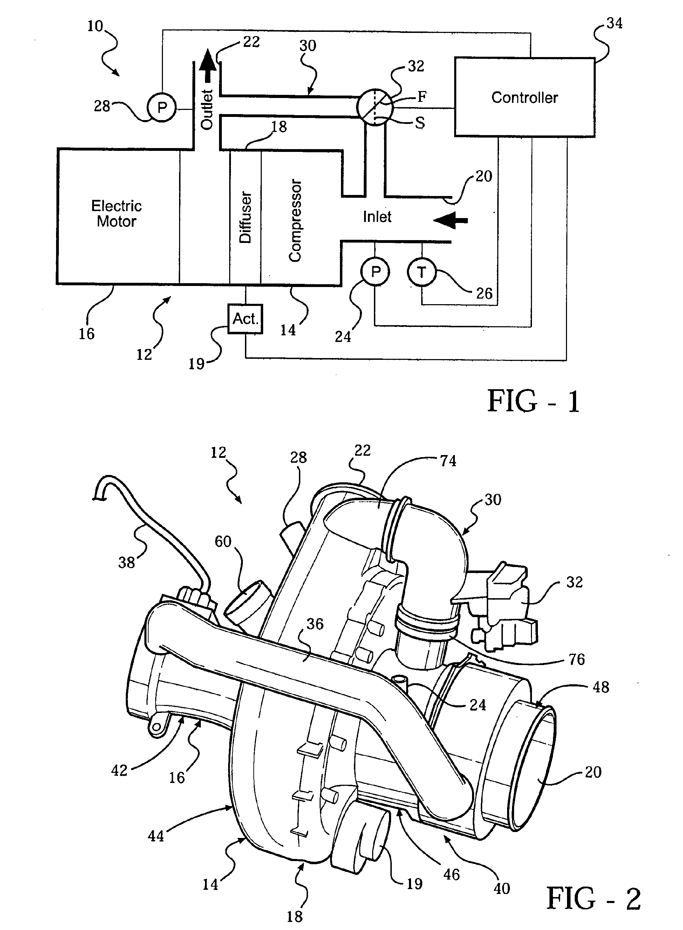

A compressed air system is shown schematically at 10 in Figure 1. The compressed air system 10 includes a compressed air unit 12 comprising a compressor 14 driven by an electric motor 16. A diffuser 18 is arranged before an outlet 22 of the compressor 14, as is known in the art. The diffuser 18 is manipulated by an actuator 19 to vary its area. Air enters the compressor 14 through an inlet 20. Pressure and temperature inlet sensors 24 and 26 are arranged at the inlet 20, and a pressure outlet sensor 28 is arranged at the outlet 22. The actuator 19 and sensors 24, 26 and 28 are schematically shown in communication with a controller 34. The controller 34 uses the sensors 24, 26 and 28 to determine surge and add-heat conditions. The compressed air system 10 described above is suitable for providing, for example, compressed air to an air cycle machine for producing conditioned cabin air.

The present invention utilizes a duct 30 to fluidly connect the inlet 20 and outlet 22. A valve 32 is arranged between the inlet 20 and outlet 22 within the duct 30. The controller 34 is in communication with the valve 32 to move it between first and second positions F and S in response to the surge and add-heat conditions. According to this invention, only one valve is used for these conditions. In one example, the valve 32 is a butterfly valve.

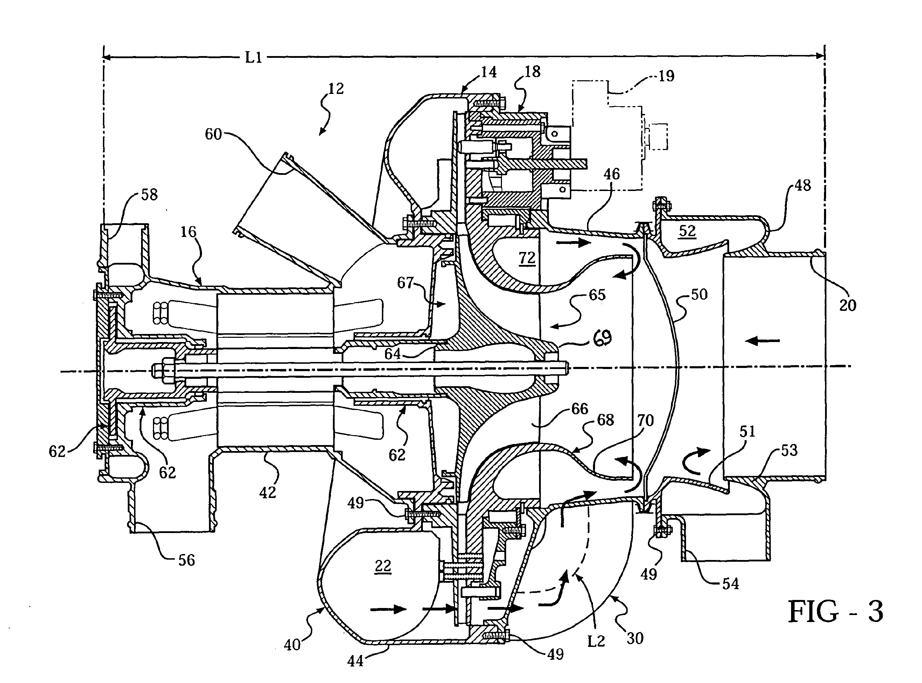

Referring to Figures 2 and 3, wires 38 extend from a housing 40 to provide power to the electric motor 16. The housing 40 includes motor, outlet, add-heat and inlet housing portions 42, 44, 46 and 48 secured to one another by fasteners 49. A screen 50 is arranged between the add-heat housing 46 and the inlet housing 48. A cooling supply plenum 52 is arranged at the inlet 20 to provide cooling air for the electric motor 16. The cooling supply plenum 52 is defined, in part, by first and second flanges 51 and 53. The cooling supply plenum 52 includes an outlet 54 that is connected to a cooling inlet 56 by a bearing cooling duct 36 (shown in Figure 2). Bearings 62 support a rotor 64 of the electric motor 16. A bearing cooling inlet 58 provides cooling air to a bearing cooling outlet 60 via a duct (not shown).

An impeller 66 is secured to the rotor 64. The impeller 66 has an inlet side 65 and outlet side 67. The diffuser 18 is arranged on the outlet side 67 between the impeller 66 and the outlet 22. The housing 40 includes a diffuser shroud 68 in close proximity to the impeller 66. The diffuser shroud 68 extends beyond an end 69 of the impeller 66.

The housing 40 provides an add-heat plenum 72 formed by the diffuser shroud 68 and the add-heat housing 46. The diffuser shroud 68 provides a curved annular wall 70 that tapers radially outwardly as it extends axially away from the end 69 of the impeller 66.

The outlet housing 44 provides an add-heat supply outlet 74 (best shown in Figure 2) that is connected to an add-heat plenum inlet 76 of the add-heat housing 46. In the example shown, the duct 30 is relatively short having a length L2 (represented by the dashed line) that is less than a length L1 of the compressed air unit 12. This relatively short length enables the curved annular wall 70 to be quickly heated in response to sensing an add-heat condition. Similarly, the response time when sensing a surge condition is rapid. A remotely located valve may not provide a desirable response time.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A compressed air unit (12) comprising:
a housing (40) including first and second housing portions (48,46) respectively providing an inlet and an outlet, and the first and second housing portions respectively providing an add-heat plenum inlet (76) and an add-heat supply outlet (74) respectively in fluid communication with the inlet and outlet;
an impeller (66) arranged in the housing between the inlet and the outlet (22) for compressing fluid; and
a duct (30) fluidly connecting and extending between the add-heat supply outlet (74) and the add-heat plenum inlet (76) with a valve (32) arranged in the duct (30) for regulating the flow of fluid from the outlet to the inlet, the duct (30) having a length (L2) along which fluid flows from the add-heat supply outlet (74) to the add-heat plenum inlet (76); **characterised in that**:
the duct (30) is L-shaped; and
the housing (40) has a length (L1) from one end to the other that is greater than the length (L2) of the duct (30).

2. The unit according to claim 1, wherein the first housing is an outlet housing (44) and the second housing is an add-heat housing (46) secured to the outlet housing (44), the housing including an inlet housing (48) secured to the add-heat housing (46) opposite the outlet housing (44), the add-heat and inlet housings (46,48) arranged upstream of the impeller (66).

3. The unit according to claim 2, wherein a shroud (68) is arranged between the impeller (66) and the add-heat housing (46) forming an add-heat plenum (72) in fluid communication with the add-heat plenum inlet (76), the shroud (68) providing an annular wall (70).

4. The unit according to claim 2 or 3, wherein the housing includes a motor housing (42) secured to the outlet housing (44) opposite the add-heat housing (46), an electric motor (16) arranged in the motor housing (42) and including a rotor (64) coupled to the impeller (66).

5. The unit according to any of claims 1 to 4, wherein a variable diffuser (18) is arranged between the impeller (66) and the outlet (22).

## Patentansprüche

1. Drucklufteinheit (12), umfassend:
ein Gehäuse (40) mit einem ersten und zweiten Gehäuseteil (48, 46), die jeweils einen Einlass und einen Auslass bieten, wobei der erste und zweite Gehäuseteil jeweils einen Zuwärmeplenumeinlass (76) und einen Zuwärmeversorgungsauslass (74) bieten, die jeweils in fluider Kommunikation mit dem Einlass und Auslass sind;
einen Impeller (66), der im Gehäuse zwischen dem Einlass und dem Auslass (22) angeordnet ist, um Fluid zu komprimieren; und
einen Kanal (30), der den Zuwärmeversorgungsauslass (74) und den Zuwärmeplenumeinlass (76) fluidisch verbindet und sich dazwischen erstreckt, wobei ein Ventil (32) im Kanal (30) angeordnet ist, um den Fluss des Fluids vom Auslass zum Einlass zu regulieren, wobei der Kanal (30) eine Länge (L2) hat, entlang derer Fluid vom Zuwärmeversorgungsauslass (74) zum Zuwärmeplenumeinlass (76) fließt; **dadurch gekennzeichnet, dass**:
der Kanal (30) L-förmig ist; und
das Gehäuse (40) eine Länge (L1) von einem Ende zum anderen hat, die länger als die Länge (L2) des Kanals (30) ist.

2. Einheit nach Anspruch 1, wobei das erste Gehäuse ein Auslassgehäuse (44) ist und das zweite Gehäuse ein am Auslassgehäuse (44) befestigtes Zuwärmegehäuse (46) ist, wobei das Gehäuse ein gegenüber dem Auslassgehäuse (44) am Zuwärmegehäuse (46) befestigtes Einlassgehäuse (48) umfasst, wobei das Zuwärme- und Einlassgehäuse (46, 48) dem Impeller (66) vorgelagert angeordnet sind.

3. Einheit nach Anspruch 2, wobei eine Hülle (68) zwischen dem Impeller (66) und dem Zuwärmegehäuse (46) angeordnet ist und ein Zuwärmeplenum (72) bildet, das in fluider Kommunikation mit dem Zuwärmeplenumeinlass (76) ist, wobei die Hülle (68) eine ringförmige Wand (70) bietet.

4. Einheit nach Anspruch 2 oder 3, wobei das Gehäuse ein gegenüber dem Zuwärmegehäuse (46) am Auslassgehäuse (44) befestigtes Motorgehäuse (42), einen im Motorgehäuse (42) angeordneten elektrischen Motor (16) und einen mit dem Impeller (66) gekoppelten Rotor (64) umfasst.

5. Einheit nach einem der Ansprüche 1 bis 4, wobei ein variabler Diffusor (18) zwischen dem Impeller (66) und dem Auslass (22) angeordnet ist.

## Revendications

1. Unité d'air comprimé (12) comprenant :
un carter (40) comprenant une première et une seconde parties de carter (48, 46), procurant respectivement une entrée et une sortie, et les première et seconde parties de carter procurant respectivement un espace d'entrée pour un apport de chaleur (76) et une sortie d'alimentation pour un apport de chaleur (74) respectivement en communication fluidique avec l'entrée et la sortie ;
une pompe (66) placée dans le carter entre l'entrée et la sortie (22) pour comprimer le fluide ; et
une conduite (30) connectant de manière fluidique et s'étendant entre la sortie d'alimentation pour l'apport de chaleur (74) et l'espace d'entrée pour l'apport de chaleur (76) avec une vanne (32) située dans la conduite (30) pour réguler le débit du fluide à partir de la sortie jusqu'à l'entrée, la conduite (30) ayant une longueur (L2) le long de laquelle le fluide s'écoule de la sortie d'alimentation pour l'apport de chaleur (74) vers l'espace d'entrée pour l'apport de chaleur (76) ; **caractérisée en ce que** :
la conduite (30) a une forme de L ; et
le carter (40) a une longueur (L1) d'une extrémité à l'autre qui est plus grande que la longueur (L2) de la conduite (30).

2. Unité selon la revendication 1, dans laquelle le premier carter est un carter de sortie (44) et le second carter est un carter pour un apport de chaleur (46) fixé au carter de sortie (44), le carter comprenant un carter d'entrée (48) fixé au carter pour l'apport de chaleur (46) à l'opposé du carter de sortie (44), les carters pour l'apport de chaleur et d'entrée (46, 48) étant disposés en amont de la pompe (66).

3. Unité selon la revendication 2, dans laquelle une enveloppe (68) est disposée entre la pompe (66) et le carter pour l'apport de chaleur (46), formant un espace pour un apport de chaleur (72) en communication fluidique avec l'espace d'entrée pour l'apport de chaleur (76), l'enveloppe (68) procurant une paroi annulaire (70).

4. Unité selon les revendications 2 ou 3, dans laquelle le carter inclut un carter de moteur (42) fixé au carter de sortie (44) à l'opposé du carter pour l'apport de chaleur (46), un moteur électrique (16) disposé dans le carter de moteur (42) et incluant un rotor (64) couplé à la pompe (66).

5. Unité selon l'une quelconque des revendications 1 à 4, dans laquelle un diffuseur variable (18) est disposé entre la pompe (66) et la sortie (22).
